# EUROPÄISCHE PATENTSCHRIFT

(11) **EP 2 190 705 B1**
(45) Veröffentlichungstag und Bekanntmachung des Hinweises auf die Patenterteilung: **11.11.2015**
(21) Anmeldenummer: 08803594.4
(22) Anmeldetag: 03.09.2008
(51) Int. Cl.: B60T 8/40, B60T 8/48, B60L 7/24

(54) **BREMSSYSTEM FÜR EIN KRAFTFAHRZEUG**
BRAKE SYSTEM FOR A MOTOR VEHICLE
SYSTÈME DE FREINAGE POUR VÉHICULE À MOTEUR

(30) Priorität: 05.09.2007 DE 102007042204; 05.09.2007 DE 102007042202; 27.08.2008 DE 102008039960
(43) Veröffentlichungstag der Anmeldung: 02.06.2010
(73) Patentinhaber: Continental Teves AG & Co. OHG, 60488 Frankfurt (DE)
(72) Erfinder: HITZEL, Michael, 63322 Rödermark (DE); JUNG, Michael, 65551 Limburg (DE); HAUKE, Bernhard, 65239 Hochheim (DE); KLEY, Ronald, 63500 Seligenstadt (DE); SCHMITT, Stefan A., 63741 Aschaffenburg (DE)
(86) Internationale Anmeldenummer: PCT/EP2008/061623
(87) Internationale Veröffentlichungsnummer: WO 2009/030707

(56) Entgegenhaltungen:
- EP-A- 0 459 117
- EP-A- 0 539 898
- EP-A- 0 668 199
- EP-A1- 1 184 247
- WO-A-95/20511
- WO-A-2004/101308
- WO-A-2008/017726
- WO-A1-00/05114
- WO-A1-92/17357
- DE-A1- 1 916 450
- JP-A- S57 205 262

## Beschreibung

Die vorliegende Erfindung betrifft ein Bremssystem gemäß dem Oberbegriff von Anspruch 1.

Das oben angegebene Bremssystem wird häufig für Kraftfahrzeuge eingesetzt, die neben einem Verbrennungsmotor auch einen Elektromotor zu Antriebszwecken aufweisen (Hybridantrieb). Hierbei kann der Elektromotor auch als Generator zur Gewinnung von elektrischer Energie (Rekuperation) genutzt werden, wobei während der Rekuperation eine durch den Generator erzeugte Bremskraft auf zumindest eine Achse des Kraftfahrzeugs, vorzugsweise die Hinterachse, aufgebracht wird.

Der Zweck von derartigen regenerativen Bremssystemen bei Kraftfahrzeugen besteht darin, zumindest einen Teil der beim Bremsen aufgebrachten Energie in einer Batterie zu speichern und für den Antrieb des Fahrzeugs wiederzuverwenden. Dadurch kann der Energieverbrauch des Kraftfahrzeugs insgesamt gesenkt, der Wirkungsgrad erhöht und der Betrieb damit wirtschaftlicher gestaltet werden.

Aus der Druckschrift WO 2004/101308 A1 ist ein regeneratives Bremssystem für Kraftfahrzeuge bekannt, bei dem die elektrisch-regenerative Bremse (Generatorbremse) in den für sie geeigneten Bereichen parallel zu hydraulischen Reibbremsen genutzt wird. Im Fall eines solchen Arbeitsbetriebs der elektrisch-regenerativen Bremse kommt es jedoch häufig zu einer Störung der Druckverbrauchsbilanz des Bremsmittels der Reibbremsen, weil im Vergleich zu einer rein konventionellen Bremsung mit Reibbremsen bei Betrachtung der erreichten Beschleunigungsverzögerung weniger von dem vom Bremsdruckerzeugungsmittel aufgebrachten Bremsdruck von den Reibbremsen abgebaut wird, da die elektrisch-regenerative Bremse den Bremsmitteldruck nicht verringert bzw. bei Betrieb kein Bremsmittelvolumen in Anspruch nimmt. Daher wird bei dem bekannten System beim Bremsen mit einer elektrisch-regenerativen Bremse Bremsmittel in einen Druckspeicher, der vorzugsweise als Niederdruckspeicher ausgeführt ist, abgeleitet, um so ein zusätzliches Bremsen der Reibbremsen zu simulieren. Auf diese Weise wird der Druck des Bremsmittels bzw. das Druckvolumen verringert, was wiederum auf die Bremsdruckerzeugungsmittel (Bremspedal) zurückwirkt. Hierdurch wird ein komfortables Bremsgefühl erreicht.

Aus der zwischen Prioritätstag und Anmeldetag veröffentlichten Druckschrift DE 10 2007 036 859 A1 geht ein Bremssystem hervor, bei dem zwischen Tandemhauptzylinder und Einlassventil der Reibbremsen bei der rekuperativ gebremsten Achse ein Trennventil angeordnet ist, das stromlos offen ausgeführt ist. Dies Trennventil erzeugt einerseits eine Abtrennung der hydraulischen Verbindung zu dem Tandemhauptzylinder und ermöglicht andererseits im stromlosen Notzustand einen unmittelbaren hydraulisch-mechanischen Durchgriff auf die zugeordneten Reibbremsen. Das Signal zum Schließen des Trennventils wird durch die Fahrereinbremserkennung generiert. Durch die Entkopplung von Bremsdruckerzeugungsmittel und Reibbremse bzw. Hydraulikeinheit kann die Bremseinrichtung der entsprechenden Achse nach by-wire Grundsätzen geregelt werden (brake-by-wire, elektromechanische Regelung). In dem by-wire-Bremskreis ist eine Pumpe vorgesehen, welche den notwendigen Systemdruck bereitstellt.

In der Regel wird bei Ausfall der elektronischen Steuerung des hydraulischen Bremskreises ein hydraulischer Durchgriff auf beide Achsen des Kraftfahrzeugs erzeugt, so dass auf Fahrbahnen mit niedrigem Reibwert eine maximal nutzbare Verzögerung erreicht werden kann, da alle Räder bis an die Haftgrenze Bremskraft übertragen können.

Um eine Abtrennung der Hydraulikeinheit von Bremsdruckerzeugungseinrichtung zu erreichen, wird das Trennventil des bekannten Bremssystems bestromt und ist damit geschlossen von dem Zeitpunkt der Einbremserkennung bis zum Ende des Bremswunsches des Fahrers. Zwischen den einzelnen Bremsmanövern sorgt das Ventil für Volumen- und Druckausgleich über den Tandemhauptzylinder-Behälter.

Um während der by-wire-Regelung einen dynamischen Druckaufbau zu erreichen, weist das bekannte System zudem parallel zur Pumpe ein Wandler auf, der über zwei Kammern, nämlich eine eingangsseitige Steuerkammer und eine ausgangsseitige Versorgungskammer, verfügt, die von einem bewegbaren, federvorgespannten Kolben voneinander getrennt sind. Der Wandler versorgt die Pumpe auf der Saugseite mit einem Vordruck, der für einen gute Versorgung mit Bremsmittel bei gewünschtem Druck, auch bei niedrigen Temperaturen, sorgt bzw. diesen regelt. Hierbei ist das hydraulische Volumen- und Übersetzungsverhältnis des Wandlers so gewählt, dass genügend Vorladedruck und Ansaugvolumen für die Pumpe zur Verfügung steht.

Das bekannte System mit einem derartigen Wandler hat jedoch den Nachteil, dass die Herstellung kostenaufwendig ist. Zudem entspricht es hinsichtlich der Ansprechzeit noch nicht den gewünschten Anforderungen, da die Vorladung erst mit einer Verzögerung einsetzt. Das bekannte System weist ferner den Nachteil auf, dass es einen durch die Vorladung bedingten Förderleistungsverlust aufweist, da das zur Vorladung in den Volumenspeicher geförderte Volumen nicht zum Bremsdruckaufbau genutzt werden kann.

Die Aufgabe der vorliegenden Erfindung besteht demnach darin, ein Bremssystem zu schaffen, das ohne störende Volumenverluste für eine Vorladung eine unter allen Umgebungsbedingungen ausreichende Volumenversorgung der Pumpe sicherstellt und welches auch hinsichtlich der Ansprechzeit und der Herstellungskosten den Anforderungen genügt.

Die obige Aufgabe wird erfindungsgemäß durch ein Bremssystem gemäß Anspruch 1 gelöst.

Das erfindungsgemäße Bremssystem hat den Vorteil, dass es zu einer hydraulischen Vereinfachung und damit kostengünstigeren Herstellung des Bremssystems führt, da der oben beschriebene Wandler entfallen kann. Zudem kann auch der Niederdruckspeicher in dieser Hydraulikeinheit entfallen. Das erfindungsgemäße Bremssystem bewirkt zudem, dass ein schädlicher Unterdruck im Bremsmittel durch die in dem Ansaugvolumen vorgesehene Speicherung des Bremsmittels ausgeglichen wird. Die elastische Speicherung über das elastische Element ermöglicht einen sofortigen Druckausgleich unmittelbar nach der Volumenänderung an der Pumpen-Saugseite durch Wirkung der Elastizität des elastischen Elements. Das elastische Element ist vorzugsweise in der Wand angeordnete oder als Abschnitt der Wand des Ansaugvolumens gebildet, an die sich ein Ausgleichsvolumen anschließt. Bei einer Volumenänderung im Ansaugvolumen wird das elastische Element entsprechend elastisch ausgelenkt und bewirkt eine Volumenänderung der Bremsmittelkammer und entsprechend in dem Ausgleichsvolumen. Hierdurch wird einerseits die Volumen- und Druckänderung schnell ausgeglichen und erreicht, dass ein die Funktion beeinträchtigender Unterdruck über einen längeren Zeitraum, der zum Austritt von in dem Druckmittel gelöster Luft führen würde, gar nicht erst entsteht. Die Auslenkung des elastischen Elements führt dann zu einem Volumen- und Druckausgleich über das Ausgleichsvolumen.

In einem bevorzugten Ausführungsbeispiel ist das Ansaugvolumen in unmittelbarer Nähe der Saugseite der Pumpe angeordnet. Die Bohrung des Ansaugkanals sollte in vorteilhafter Weise nicht weiter als 100 mm von der Saugseite der Pumpe entfernt liegen. Dies hat den Vorteil, dass ein sehr gutes Ansprechverhalten erreicht wird, da bei einer Druckänderung in Richtung Aufbau eines Unterdrucks ohne Verschiebung erheblicher Bremsmittelvolumina ein Druckausgleich durch das Ansaugvolumen erfolgen kann. Bei einem derartigen System ist die bei Volumenentnahme erzeugte Flüssigkeitsreibung gering.

Weiterhin bevorzugt ist, wenn sich das elastische Element bei Zufuhr oder Abgabe des Bremsmittels mit minimaler Reibung bewegt. Vorteilhaft ist es hierbei, wenn die durch die Reibung verursachten Hysteresen im Druck 100 mbar nicht überschreiten. Dies führt ebenfalls zu einem sehr guten Ansprechverhalten und einem wirksamen Ausgleich bereits sehr kleiner Unterdrücke. Eine möglichst geringe Reibung wirkt sich insbesondere dadurch positiv auf das Ansprechverhalten aus, da bei anfänglicher Auslenkung des elastischen Elements der Anteil der durch Reibung erzeugten Kräfte an den gegen die Auslenkung des elastischen Elements wirkenden Kräften besonders groß ist.

Ansaugvolumina mit einem sich mit wenig Reibung bewegendem elastischen Element sind ebenfalls denkbar. Ein etwas aufwendiger gestaltetes Ansaugvolumen ist ein Blasenspeicher mit einer Gummiblase, die mehrschichtig ausgebildet ist. In dem Mehrschichtverbund der Gummiblase ist vorzugsweise eine Metallschicht vorgesehen, um einer Gasdiffusion entgegen zu wirken.

Erfindungsgemäß wird das Ansaugvolumen durch ein Bremsmittel-Reservoir gebildet. Als elastisches Element weist das Bremsmittel-Reservoir eine Membran auf, welche als EPDM-Membran (Ethylen-Propylen-Dien-Kautschuk-Membran), Metall-Faltenbalg oder eine ähnliche, aus einem elastischen Material bestehende Membran realisiert wird. Der Vorteil der Membran bzw. eines anderen elastischen Elements besteht darin, dass sich die Pumpe zu Beginn des Druckaufbaus zunächst zu 100% aus dem Volumen der Auslenkung der Membran bzw. des elastischen Elements versorgen kann.

Erfindungsgemäß ist das Bremsmittel-Reservoir über eine kommunizierende Verbindungsleitung mit dem Vorratsbehälter verbunden. Grundsätzlich hängt der bei der Realisierung verwendete Innendurchmesser von der individuellen Länge der Verbindungsleitung und der installierten Förderleistung der Pumpe ab. Beispielsweise kann ein Innendurchmesser der Verbindungsleitung von mindestens 8 mm verwendet werden, der für einen Großteil der Einsatzfälle ausreichend ist. Der Vorteil einer derartigen Ausführungsform besteht darin, dass durch

den großen Innendurchmesser der kommunizierenden Verbindungsleitung zu dem Bremsmittel-Reservoir bei Druckänderungen sehr schnell einen entsprechend großen Bremsmittel-Volumenstrom zum Ausgleich eines Unterdrucks zur Verfügung steht. Je nach Auslegung des Ansaugvolumens kann dann im Laufe des Druckaufbaus eine kontinuierliche Übergabe auf die Versorgung aus dem Vorratsbehälter erfolgen.

Zwischen der Bremseinrichtungsseite des Trennventils und dem Ansaugvolumen ist in einem bevorzugten Ausführungsbeispiel parallel zur Pumpe ein analogisiertes Druckregelventil vorgesehen, das den Systemdruck stufenlos einstellen und somit den Druck an den Bremseinrichtungen in den Rekuperationsphasen beliebig modulieren kann. Das regelbare Systemdruckventil erlaubt es, in allen Bremssituationen mit oder ohne Einbremsung des Fahrers den notwendigen Systemdruck gezielt bereitzustellen.

Weitere Merkmale, Vorteile und Anwendungsmöglichkeiten der vorliegenden Erfindung ergeben sich auch aus der nachfolgenden Beschreibung von Ausführungsbeispielen erfindungsgemäßer Bremssysteme anhand von Figuren. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen schematisch:
- Fig. 1: einen Prinzipschaltplan eines beispielgemäßen Bremssystems, und
- Fig. 2: einen Prinzipschaltplan eines,Ausführungsbeispiels eines erfindungsgemäßen Bremssystems.

Gleiche Bestandteile des Bremssystems sind in allen Figuren mit gleichen Bezugszeichen versehen.

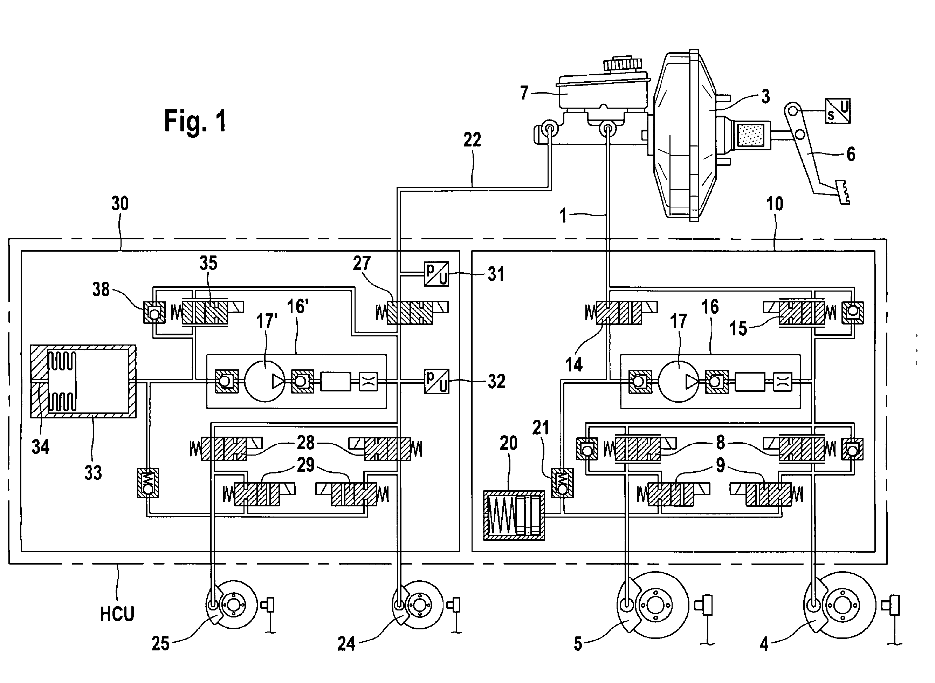

Bei dem in Figur 1 gezeigten Bremssystem handelt es sich um ein Bremssystem, das neben den vier Reibbremsen 4, 5, 24, 25 auch einen nicht dargestellten elektrischen Generator zur Erzeugung von elektrischer Energie und als regenerative Bremse aufweist. Das Bremssystem ist bevorzugt so ausgelegt, dass über den elektrischen Generator ein möglichst hohes Bremsmoment aufgebracht werden soll, um eine hohe Wirtschaftlichkeit des Kraftfahrzeugs zu erzielen. Alternativ können anstelle eines Generators ein Schwungmassenspeicher oder ein hydraulischer Wandler mit Hydrospeicher vorgesehen sein, welche kinetische Energie in potentielle Energie wandeln, um diese später zum Antrieb des Kraftfahrzeugs wiederzuverwenden.

Das Bremssystem ist mit einem Bremskraftverstärker versehen, der als Tandemhauptzylinder 3 vorzugsweise mit Hilfskraft ausgelegt ist. Der von dem Tandemhauptzylinder 3 aufgebrachte Bremsdruck wird über Hydraulikleitungen 1, 22 und die Hydraulikeinheiten 10 und 30 durch ein Bremsmittel (Bremsflüssigkeit) an die Reibbremsen 4, 5, 24, 25 weitergegeben. Die Hydraulikeinheit 10 wirkt auf die Reibbremsen 4, 5 der ersten Achse, welche vorzugsweise die Vorderachse darstellt. Die Hydraulikeinheit 30 ist mit den Reibbremsen 24, 25 der zweiten Achse, vorzugsweise der Hinterachse, verbunden. Die beiden Hydraulikeinheiten 10, 30 bilden zusammen den HCU-Block.

In dem Bremssystem ist ferner ein Bremspedal 6 als Mensch-Maschine-Schnittstelle vorgesehen, das mit dem Tandemhauptzylinder 3 verbunden ist. Das Bremspedal 6 dient zur Einstellung der gewünschten Bremskraft durch den Fahrer des Kraftfahrzeugs. Der Tandemhauptzylinder 3 weist ferner einen drucklosen Bremsmittel-Vorratsbehälter 7 auf, der mit dem Hauptzylinder 3 verbunden ist.

Die über die Hydraulikleitungen 1 mit dem Tandemhauptzylinder 3 verbundene Hydraulikeinheit 10, welche einen konventionellen ESP-Bremskreis darstellt, wird in der Regel unabhängig von der regenerativen Bremse betrieben. Die Hydraulikeinheit 10 weist Druckmodulationsventile 8, 9 (Einlassventil 8, Auslassventil 9) auf, die bei einer Bremsbetätigung durch den Fahrer über das Bremspedal 6 abhängig von den jeweils vorherrschenden Bremsschlupfwerten den Bremsdruck in den Radbremsen 4, 5 regeln. Ferner ist ein in der Grundstellung geschlossenes Umschaltventil 14 vorgesehen, welches die Verbindung zu einer Pump- und Dämpfungseinheit 16 mit einer Pumpe 17 zur Antriebsschlupf- und Fahrdynamikregelung bildet. Ferner ist ein stromlos offenes Trennventil 15 vorgesehen, welches während der Antriebsschlupf- oder Fahrdynamikregelung ein unerwünschtes Rückströmen des Druckmittels in den Tandemhauptzylinder 6 verhindert und dafür sorgt, dass das Druckmittel von der Pumpe 17 über die Druckmodulationsventile 8, 9 ausschließlich zu den Radbremsen 4, 5 gelangt.

Das Bremssystem weist außerdem einen Niederdruckspeicher 20 auf, welcher jedem Auslassventil 9 nachgeordnet ist und über ein Rückhalteventil 21 jeweils zwischen dem elektrischen Umschaltventil 14 und der Pumpe 17 an die Saugseite der Pumpe 17 angeschlossen ist. Die Einlassventile 8 sind als in Grundstellung elektromagnetisch stromlos offene Druckmodulationsventile und die Auslassventile 9 als in Grundeinstellung elektromagnetisch stromlos geschlossenes Druckmodulationsventile ausgeführt. Zur Verfeinerung der Druckmodulation und Minderung des Ventilgeräuschs ist das Druckmodulationsventil 8 im Gegensatz zum binärschaltbaren Druckmodulationsventil 9 jeweils analog regelbar.

Die zweite Hydraulikeinheit 30 ist über Hydraulikleitungen 22 mit dem Tandemhauptzylinder 3 und den Reibbremsen 24, 25 verbunden. Dieser Bremskreis wird im Rekuperationsbetrieb elektronisch gesteuert (by-wire) und, falls erforderlich, parallel zur vorzugsweise als Rekuperationsbremse ausgebildeten regenerativen Bremse betrieben, um zusätzliche Bremskraft an den Reibbremsen 24, 25 bereitzustellen. Ferner ist das Bremssystem mit der Hydraulikeinheit 30 im Fehlerfall, d.h. bei Ausfall der elektronischen Steuerung im hydraulischen Durchgriff über den Tandemhauptzylinder 3 betreibbar.

Um für die nicht dargestellte elektronische Steuerung der Hydraulikeinheit 30 die Verbindung zum Tandemhauptzylinder 3 zu unterbrechen, ist ein Trennventil 27 vorgesehen, welches stromlos offen ausgebildet ist. Das Trennventil 27 ist zwischen dem Tandemhauptzylinder 3 und der Hochdruckseite einer Pumpen- und Dämpfungseinheit 16' bzw. der Hochdruckseite der zur Pumpen- und Dämpfungseinheit 16' gehörenden, elektronisch gesteuerten Pumpe 17' angeordnet. Es wird geschlossen, sobald der Fahrer das Bremspedal 6 betätigt. Die Hydraulikeinheit 30 übernimmt dann die Bremskraftregelung der Hinterachse elektronisch gesteuert autonom. Hierbei fördert die Pumpe 17' Druckmittel zur Erzeugung des zusätzlichen Bremsmoments an den Reibbremsen 24, 25.

Die Druckänderungen zwischen Tandemhauptzylinder 3 und Trennventil 27 und an der Hochdruckseite der Pumpe 17' werden durch Drucksensoren 31, 32 erfasst. Die Pumpe 17' ist auf ihrer Hochdruckseite mit den als Druckmodulationsventile ausgebildeten elektromagnetisch stromlos offenen Einlassventilen 28 verbunden. Die Einlassventile 28 sind binär schaltbar ausgebildet. Zudem sind als Druckmodulationsventile ausgeführte Auslassventile 29 zwischen den Reibbremsen 24, 25 und einem Rückhalteventil vorgesehen. Die Auslassventile 29 sind vorteilhaft in der Grundstellung elektromagnetisch stromlos geschlossen ausgeführt.

Zum Ausgleich eines Unterdrucks ist ferner an der Saugseite der Pumpe 17' ein Metall-Faltenbalgspeicher 33 vorgesehen, der ein Ansaugvolumen aufweist, das gespeicherte Bremsflüssigkeit enthält. Es ist ferner eine hiervon getrennte Kammer vorgesehen, in der Umgebungsluft angeordnet ist, welche zum Druckausgleich für entnommene oder zugeführte Bremsflüssigkeit dient. Zur Zufuhr bzw. Abgabe der Umgebungsluft weist der Metall-Faltenbalgspeicher 33 eine Öffnung 34 zur Umgebungsluft auf. Parallel zur Pumpen- und Dämpfungseinheit 16' bzw. der Pumpe 17' ist zwischen der Saugseite der Pumpe 17' und der den Reibbremsen 24, 25 zugewandten Seiten des Trennventils 27 ein analog steuerbares Druckregelventil 35 vorgesehen, das stromlos offen ausgeführt ist.

Im Normalbetrieb wird bei Erkennung einer Fahrereinbremsung das Trennventil 27 sofort geschlossen, so dass der die Hydraulikeinheit 30 enthaltende Bremskreis elektronisch gesteuert werden kann. Die Steuerung erfolgt über die Pumpe 17' der Pumpen- und Dämpfungseinheit 16' so, dass abhängig von dem Betriebszustand und dem Bremsverhalten der regenerativen Bremse eine Bremskraft über die Reibbremsen 24, 25 bereitgestellt werden kann. Der an den Reibbremsen 24, 25 anliegende Bremsdruck wird auch durch das analog steuerbare Regelventil 35 bzw. die Auslassventile 29 gesteuert.

Wird an der Saugseite der Pumpe 17' ein Volumen entnommen und entsprechend ein Unterdruck aufgebaut, so wird das entnommene Volumen bzw. der Druck sofort durch den Metall-Faltenbalgspeicher 33 ausgeglichen, der über die Öffnung 34 Umgebungsluft aus der Umgebung ansaugt und bei dem der Faltenbalg durch den Unterdruck entsprechend verformt wird. Der Metall-Faltenbalgspeicher 33 ist vorzugsweise räumlich nahe an der Saugseite der Pumpe 17' angeordnet.

Das in der Figur 1 dargestellte Bremssystem weist ferner parallel zu dem analog steuerbaren Regelventil 35 ein Rückschlagventil 38 auf, das für einen Druckausgleich zwischen dem Ansaugvolumen 33 und der den Reibbremsen 24, 25 zugewandten Seite des Trennventils 27 sorgt, wenn auf der Seite des Ansaugvolumens 33 ein Überdruck anliegt.

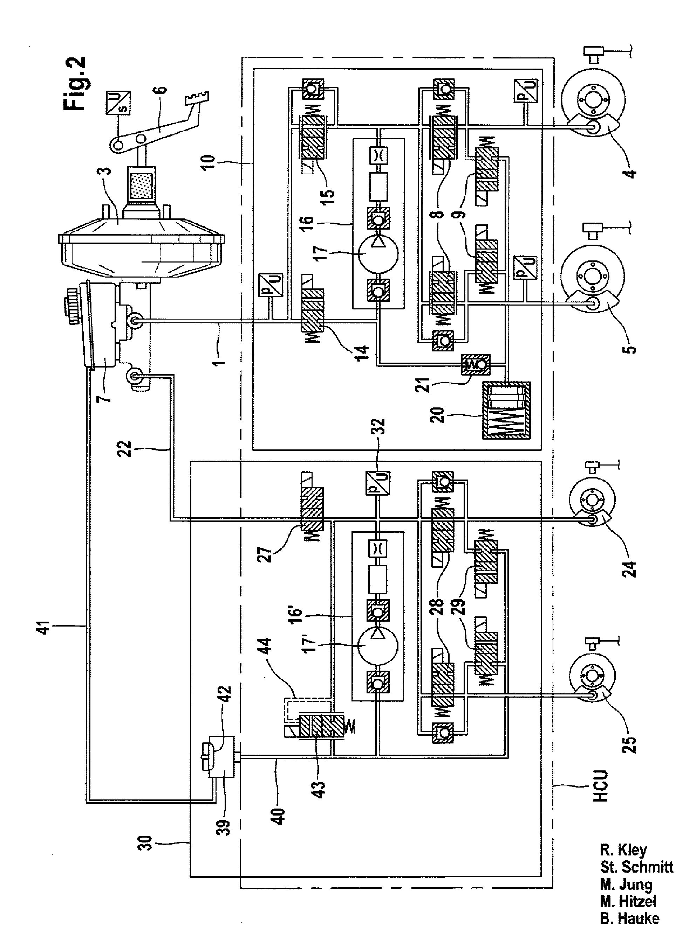

Das in Figur 2 dargestellte erfindungsgemäße Bremssystem weist als Ansaugvolumen ein Bremsflüssigkeits-Reservoir 39 auf, das über eine Verbindungsleitung 40 mit der Saugseite der Pumpe 17' verbunden ist. Das Bremsmittel-Reservoir 39 ist außerdem über eine Verbindungsleitung 41 mit dem Speicher 7 des Tandemhauptzylinders 3 verbunden. Ferner weist das Druckmittel-Reservoir 39 eine Membran 42 als elastisches Element auf.

Falls Volumen auf der Saugseite der Pumpe 17' entnommen wird und sich ein Unterdruck ausbildet, wird dieser durch das in der Verbindungsleitung 41 bereitgestellte Bremsmittel sowie durch eine Verformung der Membran 42 sofort ausgeglichen. Hierfür weisen die Verbindungsleitungen 40 und 41 einen verglichen mit den übrigen Hydraulikleitungen der Hydraulikeinheit 30 großen Innendurchmesser auf, der vorzugsweise größer als 8 mm ist, und sind vorzugsweise über einen Schlauch, eine Kunststoffleitung und/oder eine Rohrleitung ausgebildet. Hierdurch wird ein besonders großes Volumen an der Saugseite der Pumpe 17' bereitgestellt, so dass bei Ausbildung eines Unterdrucks sofort ein großes Volumen bereit steht.

Zwischen Druckmittel-Reservoir 39 und dem Trennventil 27 (bremsmittelseitig) ist parallel zu der Pumpe 17' ein analog steuerbares Regelventil 43, vorzugsweise ein PSG-Ventil (proportionalisiertes, stromlos geschlossenes Ventil), angeordnet, das stromlos geschlossen ausgeführt ist und eine Steuerdruckentlüftung 44 aufweist. Das Regelventil 43 dient zur stufenlosen Regelung des Drucks in der Hydraulikeinheit 30.

Ein erfindungsgemäßes Bremssystem ermöglicht durch das in unmittelbarer Nähe der Pumpe bevorratete Druckmittel und durch die damit verbundenen kurzen Übergabewege mit wenig Beschleunigungs- und Reibungsverlusten auch bei niedrigen Temperaturen einen ausreichend großen Volumenstrom, um dynamische Fahrmanöver zu ermöglichen sowie Dynamikanforderungen in "by-wire"-Systemen zu erfüllen.

### Bezugszeichenliste

- 1: Hydraulikleitung
- 3: Tandemhauptzylinder
- 4, 5: Reibbremse
- 6: Bremspedal
- 7: druckloser Bremsmittel-Vorratsbehälter
- 8: Druckmodulationsventil (Einlassventil)
- 9: Druckmodulationsventil (Auslassventil)
- 10: Hydraulikeinheit
- 14: Umschaltventil
- 15: Trennventil
- 16, 16': Dämpfungseinheit
- 17, 17': Pumpe
- 20: Niederdruckspeicher
- 21: Druckrückhalteventil
- 22: Hydraulikleitung
- 24, 25: Reibbremse
- 27: Trennventil
- 28: Einlassventil
- 30: Hydraulikeinheit
- 31, 32: Drucksensor
- 33: Metall-Faltenbalgspeicher
- 34: Öffnung
- 35: Regelventil
- 36: Kolbenspeicher
- 37: Öffnung
- 38: Rückhalteventil
- 39: Bremsflüssigkeits-Reservoir
- 40, 41: Verbindungsleitung
- 42: Membran
- 43: PSG-Ventil
- 44: Steuerdrucklüftung

## Patentansprüche

1. Bremssystem für ein Kraftfahrzeug, das ein Bremsdruckerzeugungsmittel (3) mit oder ohne Hilfsenergie mit einem drucklosen Vorratsbehälter (7) aufweist, wobei das Bremsdruckerzeugungsmittel (3) mit einer Mensch-Maschine-Schnittstelle (6) verbunden ist, das über ein Bremsmittel zur Erzeugung von hydraulischem Bremsdruck für Bremseinrichtungen (4, 5, 24, 25), vorzugsweise Reibbremsen, dient, wobei das Bremssystem mindestens eine erste Hydraulikeinheit (30) und eine zweite Hydraulikeinheit (10) zur Verbindung des Bremsdruckerzeugungsmittels (3) mit den Bremseinrichtungen mindestens einer Achse und zur Weiterleitung des hydraulischen Bremsdrucks über das Bremsmittel vorsieht, wobei die zweite Hydraulikeinheit (10) einem konventionellen ESP-Bremskreis entspricht und die erste Hydraulikeinheit (30) eine Pumpe (17') mit einer Hochdruck- und einer Saugseite aufweist und elektrohydraulisch steuerbar und unabhängig von dem von dem Bremsdruckerzeugungsmittel (3) erzeugten Bremsdruck betreibbar ist sowie ein mit der Saugseite der Pumpe (17') verbundenes Ansaugvolumen (39) aufweist, welches bei Änderung des Volumens und des Drucks auf der Saugseite der Pumpe (17') für einen Druckausgleich über das in dem Ansaugvolumen (39) gespeicherte Bremsmittel sorgt, wobei als Ansaugvolumen ein Bremsmittel-Reservoir (39) mit einem elastischen Element, das vorzugsweise als Membran (42) ausgebildet ist, vorgesehen ist, und wobei das Bremsmittel-Reservoir (39) über eine kommunizierende Verbindungsleitung (41) mit dem Vorratsbehälter (7) verbunden ist.

2. Bremssystem nach Anspruch 1, **dadurch gekennzeichnet, dass** das Ansaugvolumen (39) in unmittelbarer Nähe der Niederdruckseite der Pumpe (17') angeordnet ist.

3. Bremssystem nach einem der vorhergehenden Ansprüche, **dadurch gekennzeichnet, dass** sich das elastische Element (42) bei Zufuhr oder Abgabe von Bremsmittel mit minimaler Reibung bewegt.

4. Bremssystem nach einem der Ansprüche 1 bis 3, **dadurch gekennzeichnet, dass** das Bremsmittel-Reservoir (39) über die kommunizierende Verbindungsleitung (41), vorzugsweise über einen Schlauch, eine Kunststoffleitung und/oder eine Rohrleitung, mit einem verglichen mit den Innendurchmessern der übrigen Hydraulikleitungen der ersten Hydraulikeinheit größeren Innendurchmesser, mit der Pumpe (17') verbunden ist.

5. Bremssystem nach einem der vorhergehenden Ansprüche, **dadurch gekennzeichnet, dass** die kommunizierende Verbindungsleitung (41) zwischen Bremsmittel-Reservoir (39) und Vorratsbehälter (7) als ein Schlauch oder eine Kunststoffleitung und/oder eine Rohrleitung mit einem verglichen mit den Innendurchmessern der übrigen Hydraulikleitungen der ersten Hydraulikeinheit (30) größeren Innendurchmesser ausgeführt ist.

6. Bremssystem nach einem der vorhergehenden Ansprüche, **dadurch gekennzeichnet, dass** zwischen der Saugseite der Pumpe (17') und der den Bremseinrichtungen (24, 25) zugewandten Seite eines Trennventils (27), welches zwischen dem Bremsdruckerzeugungsmittel (3) und der Hochdruckseite der Pumpe (17') angeordnet ist, ein analogisiertes Druckregelventil (43) angeordnet ist.

## Claims

1. Brake system for a motor vehicle which has a brake pressure-generating means (3), with or without power-assistance, with a non-pressurized storage reservoir (7), the brake pressure-generating means (3) being connected to a human-machine interface (6), which by way of a brake fluid serves for generating hydraulic brake pressure for brake devices (4, 5, 24, 25), preferably friction brakes, the brake system providing at least a first hydraulic unit (30) and a second hydraulic unit (10) for connecting the brake pressure-generating means (3) to the brake devices of at least one axle and for transmitting the hydraulic brake pressure by way of the brake fluid, the second hydraulic unit (10) corresponding to a conventional ESP brake circuit and the first hydraulic unit (30) having a pump (17') with a high-pressure side and a suction side and being electro-hydraulically controllable and capable of operation independently of the brake pressure generated by the brake pressure-generating means (3), and having a suction volume (39), which is connected to the suction side of the pump (17') and which, in the event of a change in the volume and in the pressure on the suction side of the pump (17'), provides a pressure equalization by way of the brake fluid stored in the suction volume (39) a brake fluid reservoir (39) being provided as suction volume, having an elastic element which is preferably formed as a diaphragm (42), and the brake fluid reservoir (39) being connected to the storage reservoir (7) by way of a communicating connecting line (41).

2. Brake system according to Claim 1, **characterized in that** the suction volume (39) is located in direct proximity to the low-pressure side of the pump (17').

3. Brake system according to either of the preceding claims, **characterized in that** the elastic element (42) moves with minimal friction during the admission or delivery of brake fluid.

4. Brake system according to one of Claims 1 to 3, **characterized in that** the brake fluid reservoir (39) is connected to the pump (17') by way of the communicating connecting line (41), preferably by way of a hose, a plastic line and/or a pipeline, having a larger inside diameter than the inside diameter of the other hydraulic lines of the first hydraulic unit.

5. Brake system according to one of the preceding claims, **characterized in that** the communicating connecting line (41) between the brake fluid reservoir (39) and the storage reservoir (7) is configured as a hose or a plastic line and/or a tube line with a greater internal diameter than the internal diameters of the remaining hydraulic lines of the first hydraulic unit (30).

6. Brake system according to one of the preceding claims, **characterized in that** an analog pressure regulating valve (43) is located between the suction side of the pump (17') and the side of an isolating valve (27) facing the brake devices (24, 25), which isolating valve (27) is arranged between the brake pressure-generating means (3) and the high-pressure side of the pump (17').

## Revendications

1. Système de freinage pour un véhicule à moteur, présentant un moyen de génération de pression de freinage (3) avec ou sans énergie auxiliaire, avec un réservoir non pressurisé (7), le moyen de génération de pression de freinage (3) étant connecté à une interface homme-machine (6), lequel moyen, par le biais d'un fluide de frein, sert à générer une pression de freinage hydraulique pour des dispositifs de freinage (4, 5, 24, 25), de préférence des freins à friction, le système de freinage présentant au moins une première unité hydraulique (30) et une deuxième unité hydraulique (10) pour connecter le moyen de génération de pression de freinage (3) aux dispositifs de freinage d'au moins un essieu et pour transférer la pression de freinage hydraulique par le biais du fluide de frein, la deuxième unité hydraulique (10) correspondant à un circuit de freinage ESP conventionnel et la première unité hydraulique (30) présentant une pompe (17') avec un côté haute pression et un côté d'aspiration et pouvant être commandée de manière électrohydraulique et indépendamment de la pression de freinage générée par le moyen de génération de pression de freinage (3) et présentant un volume d'aspiration (39) connecté au côté d'aspiration de la pompe (17'), lequel volume d'aspiration, lors d'une variation du volume et de la pression du côté d'aspiration de la pompe (17'), assurant un équilibre de pression par le biais du fluide de frein accumulé dans le volume d'aspiration (39), un réservoir de fluide de frein (39) pourvu d'un élément élastique qui est réalisé de préférence sous forme de membrane (42) étant prévu en tant que volume d'aspiration, et le réservoir de fluide de frein (39) étant connecté par le biais d'une conduite de connexion de communication (41) au réservoir (7).

2. Système de freinage selon la revendication 1, **caractérisé en ce que** le volume d'aspiration (39) est disposé à proximité immédiate du côté basse pression de la pompe (17').

3. Système de freinage selon l'une quelconque des revendications précédentes, **caractérisé en ce que** l'élément élastique (42) se déplace avec un frottement minimal lors de l'alimentation en ou de la distribution de fluide de frein.

4. Système de freinage selon l'une quelconque des revendications 1 à 3, **caractérisé en ce que** le réservoir de fluide de frein (39) est connecté à la pompe (17') par le biais de la conduite de connexion de communication (41), de préférence par le biais d'un tuyau flexible, d'une conduite en plastique et/ou d'une conduite tubulaire ayant un diamètre intérieur supérieur aux diamètres intérieurs des autres conduites hydrauliques de la première unité hydraulique.

5. Système de freinage selon l'une quelconque des revendications précédentes, **caractérisé en ce que** la conduite de connexion de communication (41) entre le réservoir de fluide de frein (39) et le réservoir (7) est réalisée en tant que tuyau flexible ou conduite en plastique et/ou conduite tubulaire ayant un diamètre intérieur supérieur aux diamètres intérieurs des autres conduites hydrauliques de la première unité hydraulique (30).

6. Système de freinage selon l'une quelconque des revendications précédentes,
**caractérisé en ce qu'**entre le côté d'aspiration de la pompe (17') et le côté, tourné vers les dispositifs de freinage (24, 25), d'une soupape de séparation (27) qui est disposée entre le moyen de génération de pression de freinage (3) et le côté haute pression de la pompe (17') est disposée une soupape de régulation de pression analogisée (43).
